# EUROPÄISCHE PATENTANMELDUNG

(11) **EP 0 987 498 A2**
(43) Veröffentlichungstag der Anmeldung: **22.03.2000**
(21) Anmeldenummer: 99117092.9
(22) Anmeldetag: 31.08.1999
(51) Int. Cl.: F24D 19/10

(54) **Pumpenregelung**

(30) Priorität: 15.09.1998 DE 19842174
(71) Anmelder: WILO GmbH, D-44263 Dortmund (DE)
(72) Erfinder: Kettner, Thorsten, 45711 Datteln (DE); Schmitz, Heribert, 35619 Braunfels (DE); Schmalfuss, Horst-Georg, 58540 Meinzerzhagen (DE); Richter, Wolfgang, 01109 Dresden (DE)
(74) Vertreter: COHAUSZ HANNIG DAWIDOWICZ & PARTNER

(57) **Zusammenfassung**

Heizungs- oder Kühlsystem zur Temperierung eines Gebäudes oder eines Verkehrsmittels mit mehreren Räumen und mit in den Räumen angeordneten von einem Medium durchflossenen Wärmeübertragungselementen 3, welche in Wärmekontakt zur Umgebung stehen, wobei der Durchfluß des durch ein Wärmeübertragungselement 3 fließenden Mediums mit einer Pumpe 5, insbesondere mit einer elektrisch betriebenen Kreiselpumpe, steuerbar ist, wobei einem einzelnen Raum eine separate Pumpe 5 zugeordnet ist, die ein in dem Raum befindliches Wärmeübertragungselement 3 mit dem flüssigen Medium versorgt und wobei die Drehzahl der Pumpe 5 in Abhängigkeit der gemessenen Temperatur Tᵢₛₜ der Raumluft veränderbar ist.

## Beschreibung

Die Erfindung betrifft ein Heizungs- oder Kühlsystem zur Temperierung eines Gebäudes oder eines Verkehrsmittels mit mehreren Räumen und mit in den Räumen angeordneten von einem Medium durchflossenen Wärmeübertragungselementen, welche in Wärmekontakt zur Raumluft stehen, wobei der Durchfluß des durch ein Wärmeübertragungselement fließenden Mediums mit einer Pumpe, insbesondere mit einer elektrisch betriebenen Kreiselpumpe, steuerbar ist. Gleichzeitig betrifft die Erfindung ein Verfahren zur Regelung solcher Pumpen.

Es ist bekannt, zur Versorgung eines Heizungs- oder eines Kühlsystems eine einzelne Pumpe an einer zentralen Stelle, beispielsweise am Heizkessel anzuordnen. Diese Pumpe ist so ausgelegt, daß sie den zur Versorgung aller Heizkörper nötigen Druck in allen Leitungen des Systems bereitstellen kann. Für gewöhnlich werden jedoch die Leitungssysteme hinsichtlich ihres Leitungswiderstandes nicht optimiert, so daß ein Großteil der Pumpenleistung durch die Überwindung des Widerstandes verloren geht. Um dennoch eine ausreichende Versorgung an allen Stellen zu gewährleisten, müssen in ihrer Leistung überdimensionierte Pumpen eingesetzt werden, deren Druck in einzelnen Leitungssträngen zum Druckabgleich über Ventile reduziert werden muß. Derartige Systeme sind nicht mehr zeitgemäß, da viel Energie unnötig verbraucht wird.

Zum unnötigem Energieverlust trägt außerdem bei, daß solche klassischen Zentralheizungen in ihrem hydraulischen Aufbau als Bereitschaftsheizung ausgelegt sind und jederzeit, also auch ohne daß ein tatsächlicher Wärmebedarf besteht, an allen Bedarfsstellen ständig der von der Pumpe erzeugte Druck anliegt. Die Temperaturregelung erfolgt meist über einzelne Thermostaten, die einen zusätzlichen Widerstand im System darstellen.

Aufgabe der Erfindung ist es daher, ein Heizungs- oder Kühlsystem zu schaffen, das unter geringem Energieverbrauch ein System mit einer großen Anzahl von Wärmeübertragern wie beispielsweise Heizkörpern versorgt und das eine zuverlässige und bedarfsgerechte Temperierung mehrerer Räume eines Gebäudes oder eines Verkehrsmittels ermöglicht. Gleichzeitig ist es die Aufgabe der Erfindung, eine Regelung für eine in dem erfindungsgemäßen System eingesetzte Pumpe zu schaffen, mit der eine ökonomische, zuverlässige und außerdem anwenderfreundliche Temperierung eines Raumes möglich wird.

Diese Aufgabe wird einerseits durch ein System nach Anspruch 1 und andererseits durch eine Regelung nach Anspruch 3 gelöst.

Der besonders hervorzuhebende Gedanke der Erfindung liegt in der dezentralen Anordnung von Pumpen. Vorteilhafterweise ist dabei einem einzelnen Raum eine separate Pumpe zugeordnet, die ein oder mehrere in diesem Raum angebrachte Heiz- oder Kühlelemente mit flüssigem Medium versorgt. Für die Versorgung eines einzelnen Raumes ist erfindungsgemäß eine separate Pumpe zuständig, die entsprechend in ihrer Leistung dimensioniert und bedarfsgerecht angesteuert werden kann. In einer besonders vorteilhaften Ausführungsform ist sogar jedem einzelenen Wärmeübertragungselement, also jedem Heiz- oder Kühlelement, eine eigene Pumpe zugeordnet, die insofern die am Element angeordnete Regeleinrichtung ersetzt, als die Pumpe den Durchfluß und damit die Heizleistung des Elementes über die Drehzahl steuert. Die Pumpe ist vorteilhafterweise über eine ununterbrochene Leitung in direktem hydraulischen Kontakt zum Wärmeübertragungselement. Sie kann dabei sowohl im Vorlauf als auch im Rücklauf angeordnet sein und braucht nur den für das jeweilige Element benötigten Volumenstrom fördern.

Der andere hervorzuhebende Gedanke ist, daß sich ein solches System mit dezentralen Pumpen besonders energiesparend und bedarfsgerecht über die Raumtemperatur regeln läßt. Dabei wird die Drehzahl der Pumpe und damit der Duchtluß des Mediums durch das Wärmeübertragungselement in Abhängigkeit der in dem jeweiligen Raum gemessenen Temperatur der Raumluft verändert. Die direkte Korrelation zwischen dem tatsächlichen Bedarf an Heiz- oder Kühlleistung einerseits und der Pumpenleistung andererseits führt zu einer erheblichen Reduzierung des Energieverbrauches und bewirkt wegen der schnellen und präzisen Temperierung des Raumes eine Verbesserung des Wohnkomforts. Allein durch den nun möglichen Verzicht auf unnötige Leitungswiderstände von Thermostaten und Strangregulierventilen ist eine bedeutende Reduzierung des Energieverbrauches möglich.

Auch wenn die erfindungsgemäße Regelung sowohl in Heiz- als auch in Kühlsystemen eingesetzt werden kann, beziehen sich die nachfolgenden Ausführungen lediglich auf Heizsysteme.

Im Hinblich auf den Energieverbrauch ist an dem erfindungsgemäßen Regelverfahren besonders vorteilhaft, daß die Pumpe nicht gegen den Widerstand des Systems auf einen konstanten Durchfluß, sondern auf der Lastlinie des jeweils zugeordneten Heizkörpers regelt. So ist der Energieverbrauch den hydrodynamischen Bedingungen bei ausreichender Versorgung aller Heizkörper optimal angepaßt. Zudem gewährleistet das Verfahren eine präzise Regelung der Temperatur unter Verzicht auf zusätzliche Thermostaten. Ein aufwendiger hydraulischer Abgleich erübrigt sich. Das System kann problemlos um Heizstränge erweitert werden, ohne daß es zu Engpässen in der Versorgung kommt.

Es ist besonders vorteilhaft, wenn die Schaltelektronik der Pumpe von einer intelligenten Schaltung, insbesondere einer eigenständigen Recheneinheit, ergänzt wird. Diese Schaltung kann die Daten des Temperatursensors oder mehrerer im Raum verteilter Sensoren zunächst als Eingangs- bzw. Regelgrößen empfangen und aufbereiten und dann mit einem implementierten Programm die Weiterverarbeitung der Daten durchzuführen. Die Schaltung kann die aufbereiteten Temperaturen mit vorgebbaren Solltemperaturen (Führungsgrößen) vergleichen und der Pumpe als Ausgangs- bzw. Stellgröße die Drehzahl vorgeben. Vorteilhafterweise sind alle für die Regelung notwendigen Komponenten wie der Temperatursensor und/oder die intelligente Schaltung Bestandteil der dezentralen Pumpe. Die dezentrale Pumpe beinhaltet damit ihre eigene Regelung. Auf diese Weise läßt sich jedes Heizungssystem bequem mit solchen Pumpen nachrüsten, ohne daß es zusätzlicher Komponenten bedarf.

In einer besonders einfachen Ausführungsform bewerkstelligt das erfindungsgemäße Verfahren eine lineare Regelung bei der die Temperatur der Raumluft gemessen mit der Solltemperatur verglichen und entsprechend der Differenz die Drehzahl der Pumpe und damit der Durchfluß des Heizmediums gesteuert wird. Die Regelung für ein Kühlsystem funktioniert entsprechend. Dabei kann die Solltemperatur vorteilhafterweise manuell, beispielsweise an der Pumpe, eingestellt werden. Es ist dabei vorteilhaft und besonders bedienerfreundlich, wenn die Pumpe eine Anzeige aufweist, auf der Funktionsparameter, insbesondere die Raumtemperatur und die einzustellende Solltemperatur, anzeigbar sind. Da die Leistung der Pumpe bei bekannter Heizwassertemperatur in direktem Zusammenhang mit der Heizleistung steht, ist es möglich, den Wärmeverbrauch über die Steuerelektronik genau zu erfassen und jederzeit anzuzeigen.

Es kann jedoch aus ökonomischer Sicht und zur Verbesserung des Komforts besonders vorteilhaft sein, der Schaltung feste oder variable zeitliche Profile für die Solltemperatur vorzugeben, und die entsprechenden Isttemperaturen mit besonderen Regelmechanismen zu erzeugen. In einer besonders einfachen Form kann der Schaltung das Temperaturprofil für einen Tag manuell oder für andere Zeiträume durch ein Zeitschaltprogramm vorgebbar sein. Das Profil kann dann entsprechend abgearbeitet werden.

In einer vorteilhaften Ausführungsform kann ein solches Temperaturprofil automatisch, beispielsweise durch lernfähige Algorithmen, eingestellt werden. Dabei kann die intelligente Schaltung lernen, daß es in bestimmten Räumen, z.B. im Badezimmer, zu einer bestimmten Zeit warm sein soll. Sie würde dann frühzeitig eine mögliche Nachtabsenkung der Temperatur aufheben. Dabei kann die Steuerung den Einfluß von Umgebungsparametern wie der Außentemperatur oder der Helligkeit berücksichtigen. Vorteilhafterweise kann die intelligente Schaltung zudem Gradienten von Parametern wie der Temperatur bewerten. Beispielsweise kann sie lernen, anhand der Änderung der Außentemperatur oder der Helligkeit selber auf die Tageszeit und damit auf den Heizbedarf zu schließen. Es ist ihr mit derartigen Algorithmen auch möglich, kurzzeitige Temperaturschwankungen, wie sie beispielsweise durch das Öffnen eines Fensters hervorgerufen werden, zu erkennen und gegebenenfalls die Heizleistung zu reduzieren oder den erforderlichen Heizbedarf zu ignorieren. In einer anderen vorteilhaften Ausführungsform bewertet die Schaltung die Eingangsgrößen anhand unscharfer Bedingungen der Fuzzy-Logik oder dämpft die Regelung mit Verzögerungsalgorithmen.

In einer vorteilhaften Ausführungsform ist der Pumpe ein Maximalwert und/oder ein Minimalwert der Drehzahl und damit des Durchflusses vorgebbar. Die Regelung des Durchflusses kann dabei entweder durch eine kontinuierliche Änderung der Drehzahl zwischen dem Maximal- und dem Minimalwert oder durch phasenweises An- und Abschalten der Pumpe. Insbesondere durch die Vorgabe eines maximalen Durchflusses kann ein hydraulischer Abgleich aller Pumpen im System erfolgen, so daß keine Defizite in der Versorgung einer Pumpe durch den Heizkessel auftreten. Dabei kann der Abgleich durch Einstellung der maximalen Drehzahl manuell aber, bei verschaltung mehrerer Pumpen, auch automatisch geschehen.

Das System reagiert besonders flexibel auf die momentanen unterschiedlichen Bedürfnisse in mehreren Räumen. Dabei ist es vorteilhaft, wenn der intelligenten Schaltung Algorithmen implementiert sind, die eine Unterordnung einer einzelnen Pumpe unter die Bedürfnisse im gesamten System gewährleisten. Mit solchen Algorithmen stellt sich die Drehzahl einer jeden Pumpe automatisch so ein, daß es zu keiner Unterversorgung an einem Punkt des Systemes kommt und dennoch bestimmte Prioritäten gewahrt sind.

In einer besonderen Ausführungsform des Verfahrens erfolgt Informationsübertragung zwischen der Pumpe und einem im Raum angeordneten Temperatursensor über Infrarotsignale, um eine aufwendige Verkabelung von Sensoren und Pumpe zu vermeiden. Vorteilhaft an der Erfindung ist zudem, daß die dezentralen Pumpen auch in Verkehrsmitteln wie Schiffen, Bahnen oder Flugzeugen eingesetzt werden können und dort zu einer Steigerung des Reisekomforts führen.

Ausführungsformen der Erfindung sind in den Zeichnungen 1 bis 3 dargestellt und werden im folgenden näher beschrieben. Es zeigen:
- **Figur 1**: das Heizungssystem eines Wohnhauses,
- **Figur 2**: das Regelverhalten einer temperaturgeführten Pumpe und
- **Figur 3**: ein Regelkennfeld.

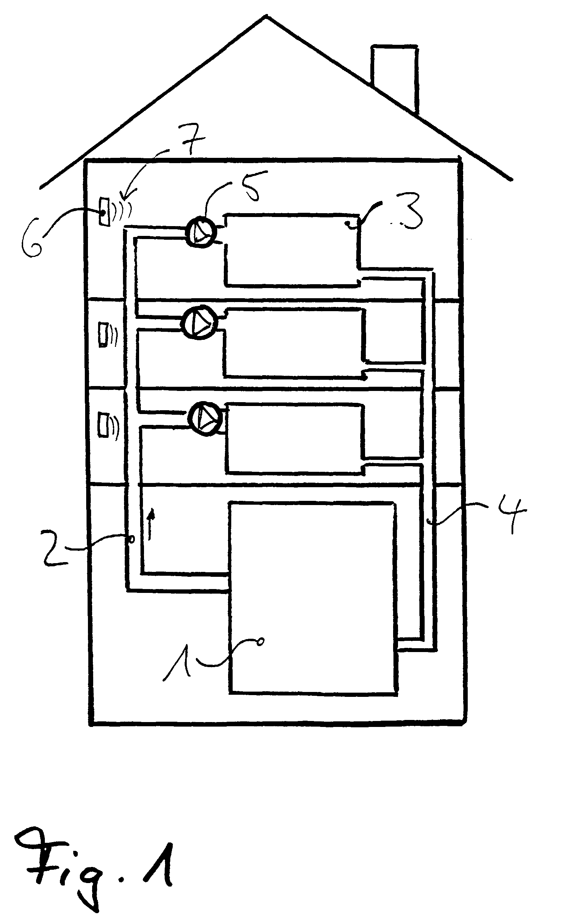

In Figur 1 ist schematisch ein Wohnhaus mit drei Etagen und einem Keller gezeigt. Das Wohnhaus mit mehreren Räumen wird von einer Zentralheizung versorgt, deren Heizkessel 1 sich im Keller befindet. In jedem Raum ist ein über einen Vorlauf 2 an den Heizkessel angeschlossenes Wärmeübertragungselement in Form eines Heizkörpers 3 angeordnet. Der Rücklauf 4 aus allen Heizkörpern mündet wiederum im Heizkessel. Der Durchfluß des heißen Wassers durch die Heizkörper wird von elektrisch betriebenen Kreiselpumpen 5 bewerkstelligt, die im jeweiligen Vorlauf eines Heizkörpers angebracht sind. Die Pumpen 5 befinden sich direkt am Einlaß des jeweiligen Heizkörpers. Im gezeigten Ausführungsbeispiel versorgt eine Pumpe jeweils einen Heizkörper. Die Schaltelektronik einer jeden Pumpe 5 beinhaltet eine intelligente Schaltung, welche eine Regelung ermöglicht.

Die Regelung der Pumpen 5 erfolgt über Temperaturmessungen mittels Temperaturfühlern 6, die in diesem Falle in den einzelnen Räumen angeordnet sind. Die Informationsübertragung zwischen einer Pumpe 5 und einem Sensor 6 erfolgt über Infrarotsignale. In diesem einfachen Ausführungsbeispiel wird zur Regelung die Temperatur Tᵢₛₜ der Raumluft gemessen und auf die Steuerelektronik per Infrarotsignal 7 übertragen. Die Steuerelektronik vergleicht Tᵢₛₜ mit einer vorgebbaren Solltemperatur Tₛₒₗₗ und steuert die Drehzahl der Pumpe und damit den Durchfluß des heißen Wassers durch den jeweiligen Heizkörper.

Die Steuerung der Drehzahl erfolgt entlang der in Figur 2 gezeigten Geraden 8. In Figur 2 ist das Regelverhalten einer temperaturgeführten Pumpe durch ein Diagramm dargestellt. Auf der Ordinate 9 ist die zunehmende Drehzahl, auf der Abszisse 10 die Temperatur aufgetragen. Die Regelung bewirkt nunmehr, daß die Drehzahl der Pumpe und damit der Durchfluß des Heizmediums erhöht wird, wenn die gemessene Temperatur kleiner als die durch eine unterbrochene Linie dargestellte Solltemperatur Tₛₒₗₗ ist. Entsprechend wird die Leistung der Pumpe 5 vermindert wird, wenn die gemessene Temperatur größer als die Solltemperatur Tₛₒₗₗ ist. Die Regelung der Drehzahl erfolgt in einem Drehzahlbereich zwischen einer vorgebbaren maximalen Drehzahl 12 und einer ebenso vorgebbaren minimalen Drehzahl 13 und amit des Durchflusses.

In Figur 2 kann anhand der unterbrochenen Geraden 11 das Regelverhalten einer Kühlung entnommen werden. Wie schon für die Heizung dargelegt, wird zunächst die Temperatur Tᵢₛₜ der Raumluft gemessen und mit der vorgebbaren Solltemperatur Tₛₒₗₗ verglichen. Die Drehzahl der Pumpe und damit der Durchfluß des Kühlmediums wird erhöht, wenn die gemessene Temperatur größer als die Solltemperatur Tₛₒₗₗ ist und umgekehrt.

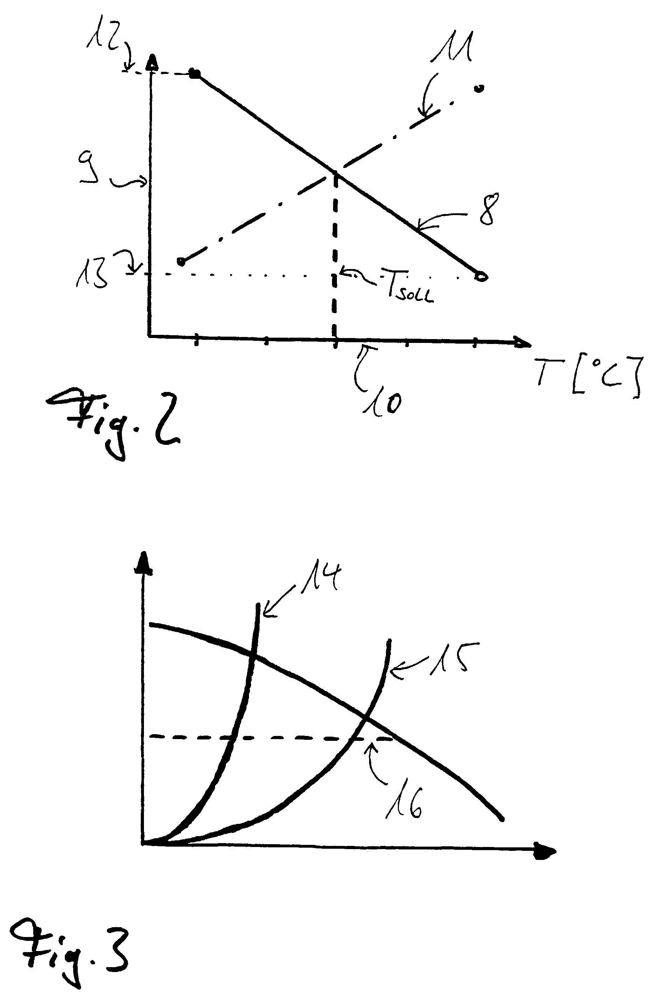

Figur 3 zeigt ein Diagramm mit Regelkennfeld, wobei auf der Ordinate die Höhe beispielsweise in der Einheit 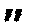 Meter" und auf der Abszisse der Durchfluß beispielsweise in 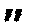 Litern pro Stunde" angegeben sind. Während eine herkömmliche Regelung bei Änderung der Rohrnetzparabel d.h. bei Änderung des Widerstandes im Leitungsnetz (hier dargestellt durch die Parabeln 14 und 15) nach einem konstanten Druck regelte (unterbrochene horizontale Gerade 16), geschieht die Regelung nunmehr entlang der Rohrnetzparabel des jeweiligen durch die Pumpe versorgten Heizkörpers.

## Patentansprüche

1. Heizungs- oder Kühlsystem zur Temperierung eines Gebäudes oder eines Verkehrsmittels mit mehreren Räumen und mit in den Räumen angeordneten von einem Medium durchflossenen Wärmeübertragungselementen (3), welche in Wärmekontakt zur Umgebung stehen, wobei der Durchfluß des durch ein Wärmeübertragungselement (3) fließenden Mediums mit einer Pumpe (5), insbesondere mit einer elektrisch betriebenen Kreiselpumpe, steuerbar ist,
**dadurch gekennzeichnet**, daß einem einzelnen Raum eine separate Pumpe (5) zugeordnet ist, die ein in dem Raum befindliches Wärmeübertragungselement (3) mit dem flüssigen Medium versorgt.

2. Heizungssystem nach Anspruch 1,
**dadurch gekennzeichnet,** daß die Pumpe (5) nur ein Wärmeübertragungselement (3) mit Medium versorgt, wobei die Pumpe (5) in direktem hydraulischen Kontakt im Vorlauf (2) oder im Rücklauf (4) des Wärmeübertragungselementes (3) angeordnet ist.

3. Verfahren zur Regelung der Drehzahl einer Pumpe, die insbesondere in dem Heizungs- oder Kühlsystem nach den Ansprüchen 1 und 2 eingesetzt wird,
**dadurch gekennzeichnet,** daß die Drehzahl der Pumpe (5) in Abhängigkeit der gemessenen Temperatur (Tᵢₛₜ) der Umgebung, insbesondere der Raumluft, verändert wird.

4. Verfahren nach Anspruch 3,
**dadurch gekennzeichnet,**
daß die Temperatur der Raumluft (Tᵢₛₜ) gemessen wird und das Ergebnis der Messung einer der Schaltelektronik der Pumpe (5) zugeordneten intelligenten Schaltung zugeführt wird, welche die Messung aufgrund des Unterschiedes zwischen der gemessenen Raumtemperatur und einer vorgebbaren Solltemperatur (Tₛₒₗₗ) bewertet und eine Steuerung der Drehzahl veranlaßt.

5. Verfahren nach Anspruch 4,
**dadurch gekennzeichnet,**
daß ein Sensor (6) zur Messung von Tᵢₛₜ und/oder daß die intelligente Schaltung Bestandteil der Schaltelektronik der Pumpe (5) ist.

6. Verfahren nach einem der vorherigen Ansprüche,
**dadurch gekennzeichnet,** daß in die intelligente Schaltung Regelmechanismen implementiert sind, die eine Bewertung des Temperaturgradienten erlauben oder die Verzögerungsalgorithmen, lernfähige Algorithmen oder Algorithmen einer Fuzzy-Logik enthalten.

7. Verfahren nach einem der vorherigen Ansprüche,
**dadurch gekennzeichnet,** daß die Steuerung der Pumpleistung durch Regelung der Drehzahl im Bereich zwischen dem Abschalten und der maximalen Drehzahl oder durch phasenweises Einschalten der Pumpe (5) erfolgt.

8. Verfahren nach einem der vorherigen Ansprüche,
**dadurch gekennzeichnet,** daß die Vorgabe der Solltemperatur über manuelle Bedienelemente erfolgt.

9. Verfahren nach einem der vorherigen Ansprüche,
**dadurch gekennzeichnet,** daß die Vorgabe der Solltemperatur automatisch in Abhängigkeit externer Parameter wie der Jahreszeit, der Tageszeit, oder der Außentemperatur geschieht.

10. Verfahren nach Anspruch 9,
**dadurch gekennzeichnet,** daß zur Vorgabe der Solltemperatur lerntähige Algorithmen eingesetzt werden.

11. Verfahren nach einem der vorherigen Ansprüche,
**dadurch gekennzeichnet,** daß die Temperaturmessung an mehreren Stellen in einem Raum vorgenommen wird.

12. Verfahren nach einem der vorherigen Ansprüche,
**dadurch gekennzeichnet,** daß die Informationsübertragung zwischen der Pumpe (5) und dem Sensor (6) über Infrarotsignale (7) erfolgt.

13. Verfahren nach einem der vorherigen Ansprüche,
**dadurch gekennzeichnet,** daß die Pumpe (5) eine Anzeige aufweist, auf der Funktionsparameter, insbesondere die Raumtemperatur und die Solltemperatur anzeigbar sind.

14. Verfahren nach einem der vorherigen Ansprüche,
**dadurch gekennzeichnet,** daß einer Pumpe (5) ein Maximalwert (12) und/oder ein Minimalwert (13) der Drehzahl und damit des des Durchflusses vorgebbar ist.

15. Verfahren nach einem der vorherigen Ansprüche,
**dadurch gekennzeichnet,**
- daß die Temperatur (Tᵢₛₜ) der Raumluft gemessen wird,
- daß die gemessene Temperatur (Tᵢₛₜ) mit einer vorgebbaren Solltemperatur (Tₛₒₗₗ) verglichen wird,
- daß die Drehzahl der Pumpe und damit der Durchfluß des Heizmediums erhöht wird, wenn die gemessene Temperatur kleiner als die Solltemperatur (Tₛₒₗₗ) ist und
- daß die Pumpleistung der Pumpe vermindert wird, wenn die gemessene Temperatur größer als die Solltemperatur (Tₛₒₗₗ) ist.

16. Verfahren nach einem der vorherigen Ansprüche,
**dadurch gekennzeichnet,**
- daß die Temperatur (Tᵢₛₜ) der Raumluft gemessen wird,
- daß die gemessene Temperatur (Tᵢₛₜ) mit einer vorgebbaren Solltemperatur (Tₛₒₗₗ) verglichen wird,
- daß die Drehzahl der Pumpe und damit der Durchfluß des Kühlmediums erhöht wird, wenn die gemessene Temperatur größer als die Solltemperatur (Tₛₒₗₗ) ist und
- daß die Pumpleistung der Pumpe gemindert wird, wenn die gemessene Temperatur kleiner als die Solltemperatur (Tₛₒₗₗ) ist.
